# EUROPÄISCHE PATENTSCHRIFT

(11) **EP 2 143 642 B1**
(45) Veröffentlichungstag und Bekanntmachung des Hinweises auf die Patenterteilung: **08.06.2011**
(21) Anmeldenummer: 09165051.5
(22) Anmeldetag: 09.07.2009
(51) Int. Cl.: B65B 7/16, B65B 31/02, B65B 51/14

(54) **Hub- und Siegeleinrichtung für eine Verpackungsmaschine**
Lifting and sealing device for a packaging machine
Dispositif de levage et de scellage pour une machine d'emballage

(30) Priorität: 09.07.2008 DE 102008032306
(43) Veröffentlichungstag der Anmeldung: 13.01.2010
(73) Patentinhaber: MULTIVAC Sepp Haggenmüller GmbH & Co KG, 87787 Wolfertschwenden (DE)
(72) Erfinder: Ickert, Lars, 87437 Kempten (DE); Danner, Michael, 87752 Holzgünz (DE)
(74) Vertreter: Grünecker, Kinkeldey, Stockmair & Schwanhäusser Anwaltssozietät

(56) Entgegenhaltungen:
- DE-A1- 19 730 037
- JP-A- 2003 104 305
- US-A- 4 075 820
- US-B1- 6 305 149
- US-B2- 6 604 340

## Beschreibung

Die vorliegende Erfindung bezieht sich auf eine Hub- und Siegeleinrichtung für eine Verpackungsmaschine sowie auf eine Verpackungsmaschine, insbesondere eine Schalenverschließmaschine bzw. Traysealer oder eine Tiefziehmaschine, die eine derartige Hub- und Siegeleinrichtung aufweist. Bevorzugt ist die Erfindung anwendbar auf einen kleinen ein- oder mehrnutzigen Traysealer, wie er beispielsweise in kleinen Gastronomiebetrieben Anwendung findet, wo einzelne Schalen verschlossen werden.

Im Bereich der Verpackungsmaschinen sind Hubwerke bekannt, die zur Realisierung der Hubbewegung Kniehebelsysteme verwenden. Diese Systeme können je nach Hubstellung bzw. Winkelstellung des Hebelsystems durch die Verlagerung des Kraftangriffpunkts unterschiedlich große Kräfte aufnehmen.

Es sind des Weiteren insbesondere bei kleinen Traysealern Hubwerke mit separaten Pneumatikzylindern für Siegelung und Schneidung bekannt. Der Nachteil liegt neben dem hohen Energieverbrauch darin, dass für den Betrieb der Maschine Druckluft benötigt wird. Dies ist für Maschinen dieser Klasse sehr ungünstig und unerwünscht. Zudem ist die Siegelkraft wesentlich niedriger als bei Kniehebelsystemen.

Es ist daher die Aufgabe der vorliegenden Erfindung, eine Hub- und Siegeleinrichtung für eine Verpackungsmaschine und eine Verpackungsmaschine bereitzustellen, die einen geringen Energieverbrauch sowie einen wartungsfreundlichen und kostengünstigen Aufbau aufweisen.

Die Aufgabe wird durch eine Hub- und Siegeleinrichtung für eine Verpackungsmaschine mit den Merkmalen des Anspruchs 1 sowie durch eine Verpackungsmaschine mit den Merkmalen des Anspruchs 8 gelöst. Vorteilhafte Weiterbildungen der Erfindung sind Gegenstand der Unteransprüche.

Die Hub- und Siegeleinrichtung ist insbesondere geeignet für einen kleinen Tisch-Traysealer, in dem die Schale in eine Schublade einzulegen ist.

Die Hub- und Siegeleinrichtung gemäß der Erfindung hat ein einziges Spindelhubwerk bestehend aus einer Spindelmutter und einer Spindel, das in vorteilhafter Weise mehrere Stellungen anfahren kann. Vorzugsweise kann dieses Spindelhubwerk nicht nur zum Siegeln, sondern auch zum Schließen der Kammer und zum Durchführen der Schneidung verwendet werden, wodurch im Vergleich mit dem Stand der Technik Kosten eingespart werden.

Vorzugsweise erfolgt eine verstärkte Kraftaufbringung zum Siegeln durch eine in Reihe geschaltete pneumatische Einrichtung, die zum Beispiel durch eine Vakuumpumpe versorgt wird. Dieselbe Vakuumpumpe kann zum Beispiel auch für einen optionalen Evakuierungsprozess der Verpackungen verwendet werden. Der gesamte Antrieb ist hierfür vorzugsweise auf einer Hubplatte befestigt, die bezüglich einer ortsfesten Platte durch einen Differenzdruck zwischen der Atmosphäre und dem Vakuum bewegt werden kann. Aufgrund der Selbsthemmung der Spindel und der Trägheit des Spindelmutterantriebs wird die Spindel zusammen mit der Spindelmutter axial bewegt. Die Kraft wird dabei torsionsfrei über die Spindel geleitet.

Die Verpackungsmaschine gemäß der Erfindung hat eine Schublade, in der das ortsfeste Siegelwerkzeug und/oder das ortsfeste Kammerunterteil angeordnet sind. Alternativ kann das ortsfeste Siegelwerkzeug und/oder das ortsfeste Kammerunterteil selbst als Schublade ausgebildet sein. Durch die Schublade sind das ortsfeste Siegelwerkzeug und/oder das ortsfeste Kammerunterteil ohne Aufwand in die Verpackungsmaschine hinein und aus dieser heraus zu schieben.

Vorzugsweise kann ein Werkzeugwechsel dadurch bewirkt werden, dass das bewegbare Siegelwerkzeug zusammen mit der Spindel aus der Verpackungsmaschine entnommen wird, indem durch entsprechendes Drehen der Spindelmutter der Eingriff zwischen der Spindelmutter und der Spindel gelöst wird. Wenn vorher das ortsfeste Siegelwerkzeug mittels der Schublade aus der Verpackungsmaschine heraus geschoben wurde, kann das bewegbare Siegelwerkzeug durch den frei gewordenen Raum ebenfalls leicht entnommen werden.

Weitere Merkmale und Zweckmäßigkeiten der Erfindung ergeben sich aus der Beschreibung eines Ausführungsbeispiels anhand der beigefügten Zeichnungen. Von den Figuren zeigen:
- Fig. 1: eine schematische Seitenansicht einer Verpackungsma- schine gemäß der vorliegenden Erfindung;
- Fig. 2: eine Schnittansicht einer Hub- und Siegeleinrichtung für die Verpackungsmaschine gemäß der vorliegenden Er- findung in einer geöffneten Stellung;
- Fig. 3: eine Schnittansicht einer Hub- und Siegeleinrichtung für die Verpackungsmaschine gemäß der vorliegenden Er- findung während der Vorsiegelung und Schneidung;
- Fig. 4: eine Schnittansicht einer Hub- und Siegeleinrichtung für die Verpackungsmaschine gemäß der vorliegenden Er- findung während des Siegelns;
- Fig. 5: eine Schnittansicht einer Hub- und Siegeleinrichtung für die Verpackungsmaschine gemäß der vorliegenden Er- findung während des Evakuierens; und
- Fig. 6: eine Schnittansicht einer Hub- und Siegeleinrichtung für die Verpackungsmaschine gemäß der vorliegenden Er- findung während eines Werkzeugwechsels.

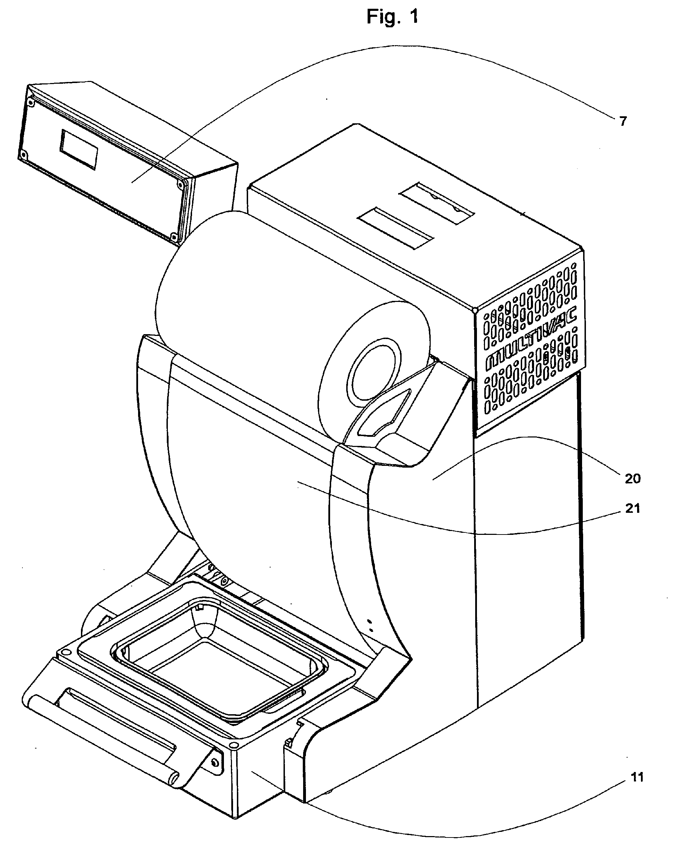

Im Folgenden wird mit Bezug auf Figuren 1 bis 6 eine Ausführungsform der Erfindung beispielhaft an einer einnutzigen Schalenverschließmaschine bzw. einem Traysealer beschrieben..

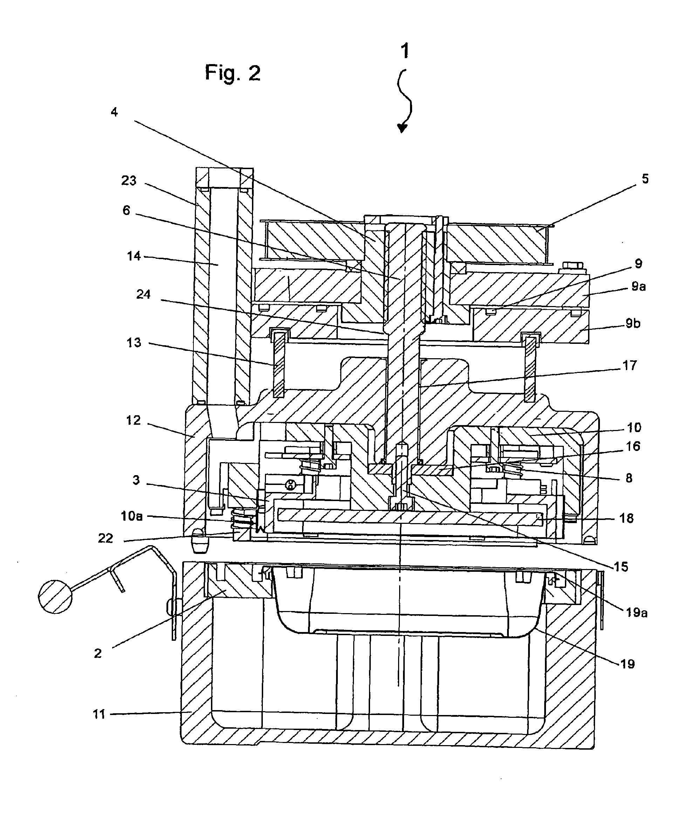

Die Fig. 1 zeigt den Traysealer mit einer Hub- und Siegeleinrichtung 1, einer Oberfolienzuführung 20 und einer Anzeige- und Steuervorrichtung 7, die den Betrieb des Traysealers steuert. Die Hub- und Siegeleinrichtung 1 hat eine Schublade 11, in der sich ein unteres Siegelwerkzeug befindet und die gleichzeitig als ein Kammerunterteil dient. Bei geschlossener Schublade 11 bzw. bei geschlossenem Kammerunterteil sind das untere Siegelwerkzeug sowie das Kammerunterteil jeweils ortfest bezüglich der Hub- und Siegeleinrichtung 1 angeordnet und wirken mit einem oberen Siegelwerkzeug bzw. einem Kammeroberteil zusammen, die im Inneren der Schalenverschließmaschine angeordnet sind, wie dies in den Figuren 2 bis 6 in weiteren Einzelheiten nachfolgend beschrieben wird. In die Schublade ist ferner eine vorgefertigte Schale 19 zum Aufnehmen des Packguts einlegbar.

Im Betrieb des Traysealers wird die befüllte Schale 19 in das untere Siegelwerkzeug bei geöffneter Schublade 11 eingesetzt und die Schublade 11 wird daraufhin geschlossen. Anschließend findet im Traysealer ein Siegel- und Schneidprozess statt, bei denen eine durch die Oberfolienzuführung 20 zugeführte Oberfolie 21 mit der Schale 19 versiegelt wird und der überstehende Oberfolienrand abgeschnitten wird. Der abgeschnittene Oberfolienrest wird manuell bei geöffneter Schublade entnommen oder über eine nicht gezeigte Restfolienaufwicklung abgeführt.

Gegebenenfalls kann vor der Versiegelung ein Evakuier- und/oder Begasungsprozess der Verpackung durchgeführt werden.

Nach dem erfolgten Siegel- und Schneidprozess wird die Schublade 11 geöffnet, und die versiegelte Schale 19 kann entnommen werden.

Die Hub- und Siegeleinrichtung 1 gemäß der Erfindung wird anhand der Figuren 2 bis 6 im Einzelnen beschrieben.

Die Hub- und Siegeleinrichtung 1 hat das ortsfeste Siegelwerkzeug 2 und ein daran angepasstes, bewegbares Siegelwerkzeug 3, wobei das ortsfeste Siegelwerkzeug 2 in der Verpackungsmaschine unten und das bewegbare Siegelwerkzeug 3 oben angeordnet sind.

Das ortsfeste Siegelwerkzeug 2 ist dazu eingerichtet, eine Schale 19 aufzunehmen. Die Schale 19 hat einen oberen Flansch 19a, an dem die zugeführte Oberfolie zu versiegeln ist. Der obere Flansch 19a liegt an dem ortsfesten Siegelwerkzeug 2 an und bildet dort eine Siegelebene.

Das bewegbare Siegelwerkzeug 3 ist zu dem ortsfesten Siegelwerkzeug 2 verfahrbar und wirkt mit dem ortsfesten Siegelwerkzeug 2 zusammen, um die Versiegelung an der Siegelebene durch örtliche Erwärmung am oberen Flansch 19a der Schale 19 zu bewirken.

Die Hub- und Siegeleinrichtung 1 hat des Weiteren eine Spindelmutter 4 und eine Spindel 6. Vorzugsweise wird eine Gleitgewindespindel verwendet, die kostengünstig und robust ist und über eine ausreichende Selbsthemmung verfügt. Eine derartige Gleitgewindespindel kann z.B. ein Trapezgewinde haben. Die Spindelmutter 4 ist über eine Hubplatte 9a mit einer ortsfesten Platte 9b verbunden, die später beschrieben werden. Die Spindelmutter 4 ist in der Hubplatte 9a drehbar aufgenommen. In vorteilhafter Weise wird das Gleitmaterial der Spindelmutter 4 selbst als axiales und radiales Lager der Spindelmutter 4 gegenüber der Hubplatte 9a verwendet. Auf diese Weise wird auf ein separates Radial- und Axiallager verzichtet, und die Spindelmutter 4 ist das einzige Verschleißteil. Die Spindelmutter 4 ist leicht auszutauschen. Die Spindelmutter 4 ist mit einem Antriebselement 5 wie zum Beispiel einer Riemenscheibe oder einem Zahnrad verbunden. Das Antriebselement 5 wird durch einen nicht gezeigten Elektromotor angetrieben, um die Spindelmutter 4 zu drehen. Der Elektromotor für den Antrieb der Spindelmutter 4 ist besonders kostengünstig, und er kann zudem mehrere Stellungen der Spindel 6 durch eine einfache Steuerung anfahren. Außerdem ermöglicht der Zeitpunkt der Entlastung von der Siegelkraft gleichzeitig ein geringeres Losbrechmoment als das verwendete Festfahrmoment, und der Motor benötigt daher keine variable Momentbegrenzung.

Die Spindel 6 ist an einem Ende mit der Spindelmutter 4 drehbar im Eingriff. Die Drehung der Spindelmutter 4 bewirkt einen axialen Hub der Spindel 6. Die Spindel 6 ist am anderen Ende über eine erste Feder 8 mit dem bewegbaren Siegelwerkzeug 3 verbunden. Bei dem gezeigten Ausführungsbeispiel stützt sich das bewegbare Siegelwerkzeug 3 über die erste Feder 8 an einem bewegbaren Schneidwerkzeug 10 ab, wobei die erste Feder 8 durch eine parallele Anordnung von vielen Schraubenfedern gebildet ist, die in Umfangsrichtung symmetrisch um die Spindelachse positioniert sind. Das bewegbare Schneidwerkzeug 10 ist wiederum durch eine Schraube 15 (Fig. 2) fest mit der Spindel 6 verbunden. Das bewegbare Schneidwerkzeug 10 trägt eine Klinge 10a, die den überstehenden Oberfolienrand abschneidet.

Zum Schutz des zu verpackenden Produktes befindet sich außerdem eine Produktschutzplatte 18 (Fig. 2) am bewegbaren Schneidwerkzeug 10.

Die Hub- und Siegeleinrichtung 1 hat des Weiteren eine pneumatische Einrichtung 9, die die Spindelmutter 4 in der Schließ- und Öffnungsrichtung bewegt. Im gezeigten Ausführungsbeispiel ist die pneumatische Einrichtung 9 unter Anderem durch die ortsfeste Platte 9b und die Hubplatte 9a gebildet. Die Spindelmutter 4 ist an der Hubplatte 9a befestigt. Zwischen der ortsfesten Platte 9b und der Hubplatte 9a befindet sich eine Vakuumkammer, die durch eine nicht gezeigte Vakuumpumpe evakuiert werden kann. Bei der Evakuierung der Vakuumkammer wird die Hubplatte 9a gegen die ortsfeste Platte 9b gedrückt, wodurch die Spindelmutter 4 und alle damit verbundenen Teile nach unten gedrückt werden.

Die Schublade 11 dient des Weiteren als das ortsfeste Kammerunterteil 11, und die Hub- und Siegeleinrichtung 1 hat des Weiteren ein daran angepasstes bewegbares Kammeroberteil 12. Das ortsfeste Kammerunterteil 11 nimmt außerdem das ortsfeste Siegelwerkzeug 2 auf. Die Schublade 11 hat einen Griff, durch den sie zusammen mit dem ortsfesten Kammerunterteil 11, dem ortsfesten Siegelwerkzeug 2 und der Schale 19 aus der Hub- und Siegeleinrichtung 1 entnommen werden kann.

Das bewegbare Kammeroberteil 12 wird durch eine ortfest gelagerte zweite Feder 13 gegen das ortfeste Kammerunterteil 11 gedrückt, wobei die zweite Feder 13 durch eine parallele Anordnung von vielen Schraubenfedern gebildet ist, die in Umfangsrichtung symmetrisch um die Spindelachse positioniert sind. Dadurch wird zwischen dem ortsfesten Kammerunterteil 11 und dem bewegbaren Kammeroberteil 12 eine im wesentlichen hermetische Kammer gebildet, in der sich das bewegbare Siegelwerkzeug 3, das ortsfeste Siegelwerkzeug 2 und das bewegbare Schneidwerkzeug 10 befinden.

Die Spindel 6 ist mit dem bewegbaren Kammeroberteil 12 in einem Zugeingriff, der es ermöglicht, das bewegbare Kammeroberteil 12 von dem ortsfesten Kammerunterteil 11 in der Öffnungsrichtung gegen die Kraft der zweiten Feder 13 weg zu ziehen. Der Zugeingriff wird durch eine Abstützplatte 16 (Fig. 2) gebildet, gegen die das bewegbare Kammeroberteil 12 durch die zweite Feder 13 gedrückt wird und die durch die Schraube 15 mit der Spindel 6 fest verbunden ist.

Die Position des bewegbare Kammeroberteils 12 wird demnach durch die Spindelposition bestimmt. Sobald das bewegbare Kammeroberteil 12 an dem ortfesten Kammerunterteilll anliegt, wird es nur durch die zweite Feder 13 gegen das ortfeste Kammerwerkzeug 11 gedrückt, und die Spindel 6 kann sich weiter nach unten bewegen. Zwischen dem bewegbaren Kammeroberteil 12 und der Spindel 6 ist eine Gleitschale 17 (Fig. 2) angeordnet, die ein Verkanten der Spindel 6 in dem bewegbaren Kammeroberteil 12 unterbindet. Wenn sich die Spindel 6 in der Öffnungsrichtung bewegt, wirkt der Zugeingriff, und das bewegbare Kammeroberteil 12 wird über die Abstützplatte nach oben gezogen.

Die Hub- und Siegeleinrichtung 1 hat des Weiteren eine Evakuierungs- und/oder Begasungsvorrichtung 14, die die im wesentlichen hermetische Kammer evakuiert, wenn das bewegbare Kammeroberteil 12 an dem ortfesten Kammerunterteil11 anliegt. Die Evakuierungs- und/oder Begasungsvorrichtung 14 hat eine Vakuumzuführleitung, die an einem Ende mit der Vakuumpumpe und am anderen Ende mit einer Öffnung im bewegbaren Kammeroberteil 12 in Verbindung ist. Bei dem gezeigten Ausführungsbeispiel ist die Vakuumzuführleitung ein starres Rohr 23, das fest mit dem bewegbaren Kammeroberteil 12 verbunden ist. Dieses starre Rohr 23 wird gleichzeitig als Drehmomentenstütze verwendet, damit sich das bewegbare Kammeroberteil 12 nicht zusammen mit der Spindel 6 dreht.

Alternativ oder zusätzlich kann eine Begasungsfunktion vorgesehen sein, die die Kammer mit einem Schutzgas begast.

Der Betrieb der Hub- und Siegeleinrichtung 1 wird durch eine elektrische Steuervorrichtung 7 gesteuert, deren Funktion nachfolgend beschrieben wird.

Die Fig. 2 zeigt eine Schnittansicht der Hub- und Siegeleinrichtung 1 für die Verpackungsmaschine gemäß der vorliegenden Erfindung in einer Ausgangssituation, bei der sie in einer geöffneten Stellung ist.

Die Steuervorrichtung 7 steuert durch das Antriebselement 5 eine Drehung der Spindelmutter 4 in einer ersten Drehrichtung, um die Spindel 6 in einer Schließrichtung zu bewegen, in der die Spindel 6 zusammen mit dem bewegbaren Siegelwerkzeug 3 zu dem ortsfesten Siegelwerkzeug 2 hin bewegt wird. Die Steuervorrichtung 7 steuert durch das Antriebselement 5 die Drehung der Spindelmutter 4 in einer zweiten Drehrichtung, die der ersten Drehrichtung entgegengesetzt ist, um die Spindel 6 in einer Öffnungsrichtung zu bewegen, in der das bewegbare Siegelwerkzeug 3 von dem ortsfesten Siegelwerkzeug 2 weg bewegt wird.

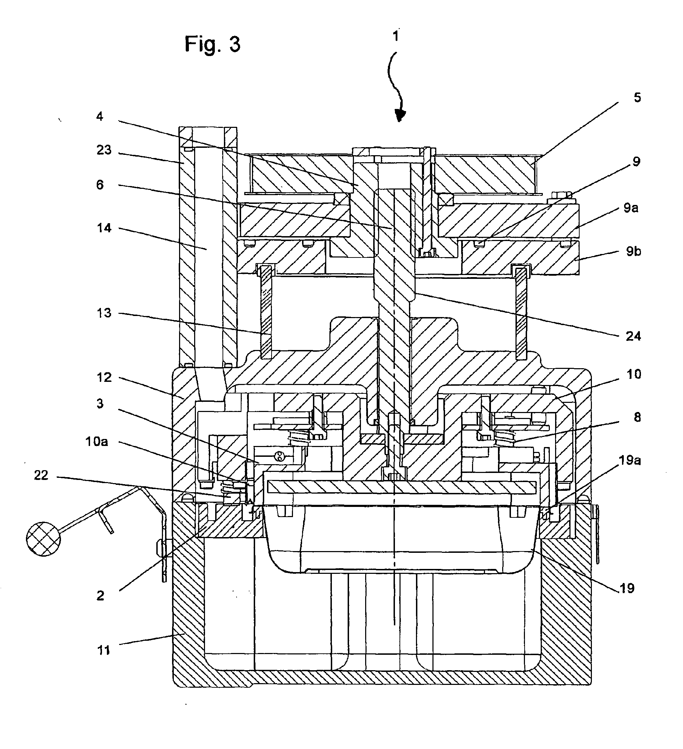

Die Fig. 3 zeigt eine Schnittansicht der Hub- und Siegeleinrichtung 1 für die Verpackungsmaschine gemäß der vorliegenden Erfindung während der Vorsiegelung und Schneidung.

Wenn das bewegbare Siegelwerkzeug 3 an das ortsfeste Siegelwerkzeug 2 verfahren werden soll, steuert die Steuervorrichtung 7 die Spindelmutter 4 in der ersten Drehrichtung an eine erste Drehposition an, bei der das bewegbare Siegelwerkzeug 3 mit dem ortsfesten Siegelwerkzeug 2 in Kontakt ist. Genauer gesagt steuert die Steuervorrichtung 7 in dem gezeigten Ausführungsbeispiel die Drehung der Spindelmutter 4 in der ersten Drehrichtung und stoppt sie an der ersten Drehposition, nachdem das bewegbare Siegelwerkzeug 3 mit dem ortsfesten Siegelwerkzeug 2 in Kontakt gelangt ist, die erste Feder 8 komprimiert wurde und das bewegbare Schneidwerkzeug 10 mit seiner Klinge 10a die Siegelebene zwischen dem ortsfesten Siegelwerkzeug 2 und dem bewegbaren Siegelwerkzeug 3 durchlaufen hat, wie dies in der Fig. 3 gezeigt ist. Demnach eilt das bewegbare Siegelwerkzeug 3 dem bewegbaren Schneidwerkzeug 10 vor. Wenn die Spindelmutter 4 in der ersten Drehrichtung an der ersten Drehposition gestoppt wird, drückt die Spindel 6 das bewegbare Siegelwerkzeug 3 mit einer relative schwachen bis mittleren Kraft gegen das ortsfeste Siegelwerkzeug 2. Wenn die erste Feder 8 nicht vollständig komprimiert wird, entspricht die Federkraft der ersten Feder 8 der Spannkraft, mit der das bewegbare Siegelwerkzeug 3 gegen das ortsfeste Siegelwerkzeug 2 gedrückt wird. Nun kann ein Vorsiegelprozess durchgeführt werden, indem der obere Flansch 19a der Schale 19 an der Siegelebene örtlich erwärmt wird.

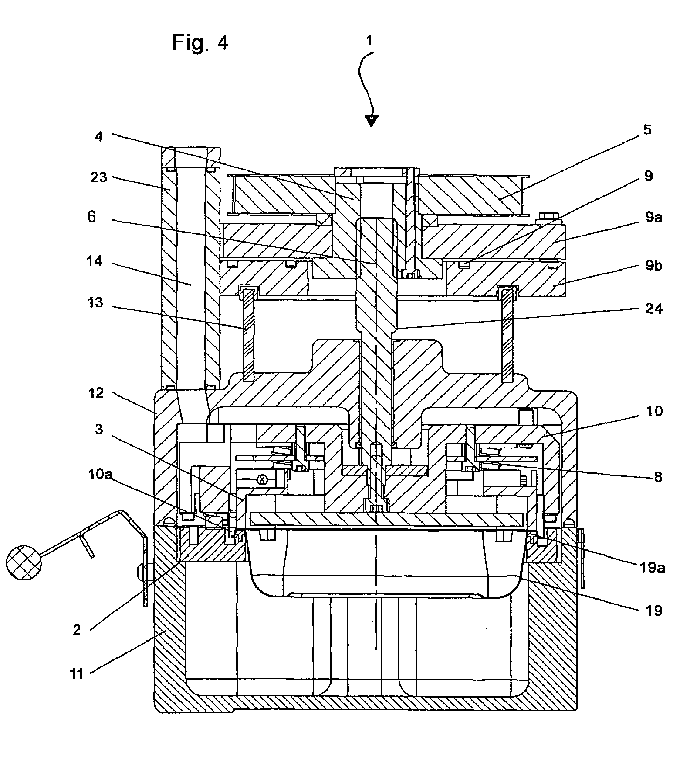

Die Fig. 4 zeigt eine Schnittansicht der Hub- und Siegeleinrichtung 1 für die Verpackungsmaschine gemäß der vorliegenden Erfindung während des nachfolgenden Siegelns.

Nachdem die Steuervorrichtung 7 die Drehung der Spindelmutter 4 in der ersten Drehrichtung an der ersten Drehposition angesteuert oder gestoppt hat, steuert die Steuervorrichtung 7 die pneumatische Einrichtung 9 derart, dass das bewegbare Siegelwerkzeug 3 stärker zu dem ortsfesten Siegelwerkzeug 2 gedrückt wird, um die erhöhte Spannkraft zum Siegeln zu erzeugen. Dabei wird die Vakuumpumpe bzw. ein dazugehöriges Ventil betätigt, so dass in dem Raum zwischen der ortsfesten Platte 9b und der Hubplatte 9a ein Vakuum erzeugt wird. Das Vakuum zieht die Hubplatte 9a an die ortsfeste Platte 9b, wodurch die Hubplatte 9a mitsamt der Spindel 6 und dem bewegbaren Siegelwerkzeug 3 mit der erhöhten Spannkraft gegen das ortsfeste Siegelwerkzeug 2 gedrückt werden. Die pneumatische Einrichtung 9 nutzt dabei die Selbsthemmung der Spindel 6, wobei die Spindelmutter 4 nur statisch axial belastet wird. Der Hub der Hubplatte 9a ist relativ gering, jedoch ist die pneumatische Hubkraft wesentlich größer als die Hubkraft, die durch den Spindelantrieb aufgebracht wird. In vorteilhafter Weise wird im Vergleich mit dem Stand der Technik ein Vakuum anstelle von Druckluft verwendet, wobei die Vakuumpumpe verwendet werden kann, die für einen optionalen Evakuierungs- und/oder Begasungsprozess verwendet wird.

In diesem Zustand führt die Hub- und Siegeleinrichtung 1 einen Siegelprozess der Verpackung durch, indem die Oberfolie 21 durch örtliche Aufbringung von Wärme an den Flansch 19a der Schale 19 verschweißt wird.

Sofern vor dem Siegeln ein Evakuier- und/oder Begasungsprozess gewünscht ist, wird der Betrieb der Hub- und Siegeleinrichtung 1 durch die Steuervorrichtung 7 geändert.

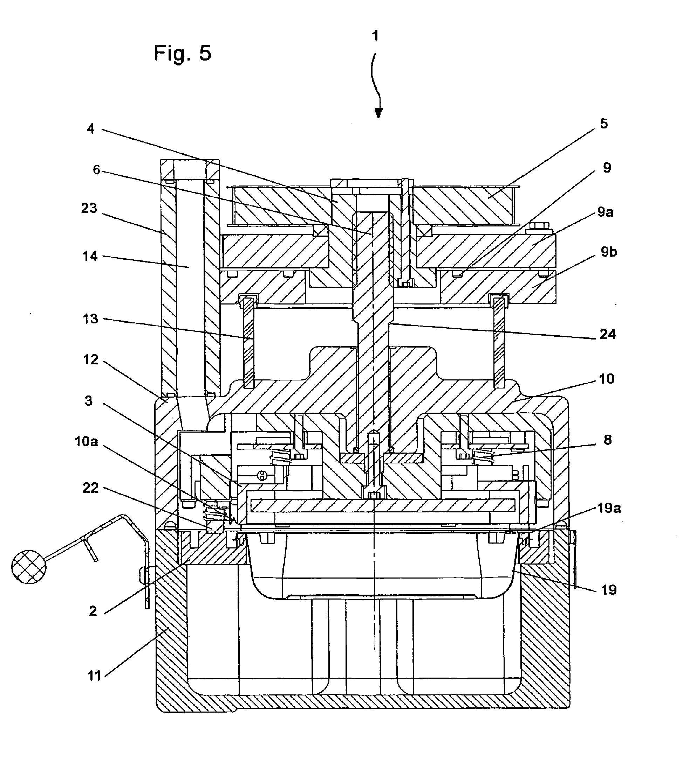

Die Fig. 5 zeigt eine Schnittansicht der Hub- und Siegeleinrichtung 1 für die Verpackungsmaschine gemäß der vorliegenden Erfindung während des Evakuierens und/oder Begasens. Die Fig. 5 zeigt einen optionalen Zwischenschritt vor dem Vorsiegeln/Schneiden gemäß der Fig. 3 und vor dem Siegeln gemäß der Fig. 4.

Bevor die Steuervorrichtung 7 das Vorsiegeln/Schneiden gemäß der Fig. 3 durchführt und bevor sie die Drehung der Spindelmutter 4 gemäß der Fig. 4 in der ersten Drehrichtung an der ersten Drehposition stoppt, wird die Drehung der Spindelmutter 4 in der ersten Drehrichtung vorläufig an einer zweiten Drehposition gestoppt, nachdem das bewegbare Kammeroberteil 12 mit dem ortsfesten Kammerunterteil 11 in Kontakt gelangt ist. Die zweite Drehposition der Spindelmutter 4 liegt in der ersten Drehrichtung vor der ersten Drehposition. Dieser Zustand ist in der Fig. 5 gezeigt. Vorzugsweise liegt dabei ein Klemmstück 22 (Fig. 5) an der Oberfolie 21 an. Das Klemmstück 22 ist federnd an dem bewegbaren Kammeroberteil 12 gekoppelt. Das Klemmstück 22 verhindert ein Verrutschen der Oberfolie 21 während des Evakuierungs- und/oder Begasungsprozesses.

Wenn die Spindelmutter 4 in der zweiten Drehposition ruht, wird die durch die Kammerwerkzeuge 11, 12 abgedichtete Kammer durch die Evakuierungs- und/oder Begasungsvorrichtung 14 evakuiert und/oder begast.

Nach der Evakuierung und/oder Begasung wird das Vorsiegeln/Schneiden gemäß der Fig. 3 durchgeführt, und die Spindelmutter 4 fährt danach die bereits beschriebene erste Drehposition gemäß der Fig. 4 an, an der das Siegeln erfolgt.

Nach Beenden des Siegelprozesses wird der evakuierte Raum zwischen der ortsfesten Platte 9b und der Hubplatte 9a belüftet, und die Spindel 6 fährt durch Drehrichtungsumkehr ihres Antriebselements 5 in der Öffnungsrichtung nach oben. Vorteilhaft ist hierbei das gleichzeitige bzw. zeitlich optimal koordinierte Starten des Antriebselements 5 mit dem Beenden des Siegelns. Hierdurch kann das Losbrechmoment des Antriebselements 5 stark verringert werden. Es werden die Anforderungen an den Antrieb verringert und die Spindel 6 sowie die Spindelmutter 4 verschleißen weniger.

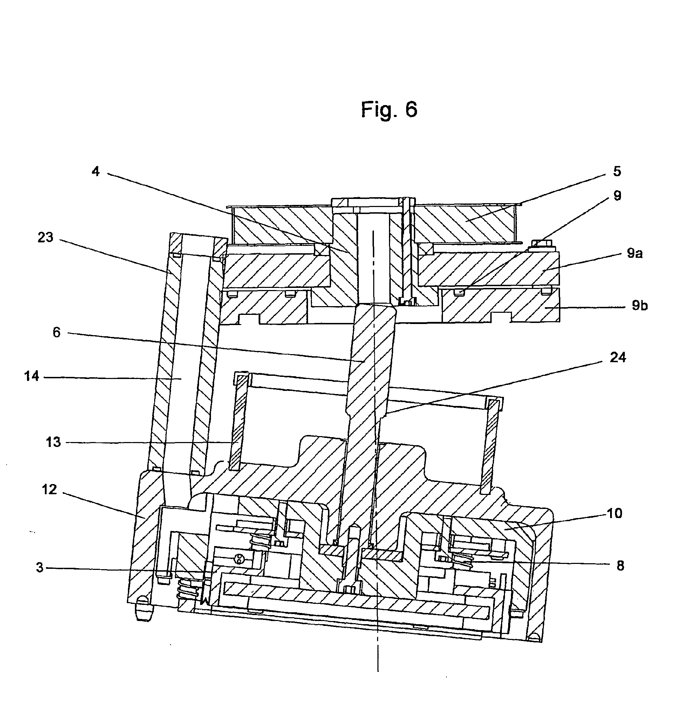

Die Fig. 6 zeigt eine Schnittansicht der Hub- und Siegeleinrichtung 1 für die Verpackungsmaschine gemäß der vorliegenden Erfindung während eines Werkzeugwechsels. Durch die Verwendung des beschriebenen Spindelantriebs kann der Werkzeugwechsel stark vereinfacht werden.

Beim Werkzeugwechsel wird zuerst die Schublade 11 bzw. das ortsfeste Kammerunterteil 11 mit dem ortsfesten Siegelwerkzeug 2 komplett heraus gezogen.

Anschließend wird das Antriebselement 5 der Spindelmutter 4 betätigt, damit die Spindel 6 vollständig in der Schließrichtung nach unten fährt und von der Spindelmutter 4 außer Eingriffgelangt.

Es können Mittel vorgesehen werden, die ein Aufprallen oder Anstoßen der Werkzeugbaugruppe dämpfen. Im gezeigten Ausführungsbeispiel verhakt sich das starre Rohr 23 der Evakuierungs- und/oder Begasungsvorrichtung 14 an der oberen Kante der Hubplatte 9a. Dadurch wird die Werkzeugbaugruppe frei aufgehängt. Vorzugsweise wird eine Verdrehsicherung vorgesehen, die ein Verdrehen der hängenden Werkzeugbaugruppe unterbindet.

Durch Öffnen einer nicht gezeigten Gehäuseklappe der Verpackungsmaschine kann die frei hängende Werkzeugbaugruppe gegebenenfalls durch Abziehen von Mediensteckern (Heizung, Vakuum, Gas, etc.) von links gemäß den Figuren 2 bis 6 entnommen werden. Vorzugsweise liegt die Werkzeugbaugruppe innen an der geschlossenen Gehäuseklappe an und wird durch das Öffnen der Gehäuseklappe durch ihre Schwerkraft schräg gestellt, da sie nur an der linken Seite gemäß der Fig. 6 aufgehängt ist.

Ein neues Werkzeugoberteil kann nun an der gleichen Stelle abgelegt werden und wird vorzugsweise durch Schließen der Gehäuseklappe oder eines anderen Mechanismus wieder mit der Spindel 6 an die Spindelmutter 4 federnd angesetzt. Die Medienstecker werden gegebenenfalls vorher angesteckt.

Nach dem Schließen der Gehäuseklappe wird das Antriebselement 5 so lange verfahren, bis die Spindel 6 in die Spindelmutter 4 eingedreht ist und eine obere Endlage erreicht.

Anschließend wird die Schublade 11 nun mit gegebenenfalls mit neuen Werkzeugteilen wieder in die Verpackungsmaschine eingeschoben.

In vorteilhafter Weise muss nur die Spindelmutter 4 bis zum "Abwerfen" der bewegbaren Werkzeugteile gedreht werden, und es ist damit ein automatischer Werkzeugwechsel nahezu ohne Zusatzaufwand möglich. Dadurch wird der Werkzeugwechsel einer solchen Maschine auf einem hohen Komfortniveau möglich.

Die vorliegende Erfindung ist nicht auf das dargestellte Ausführungsbeispiel beschränkt, sondern es sind viele Abwandlungen denkbar.

Bei dem Ausführungsbeispiel ist die Verpackungsmaschine eine Schalenverschließmaschine, die in Fachkreisen als "Traysealer" bezeichnet wird. Die Erfindung ist aber nicht auf diese Art beschränkt. Vielmehr kann die Verpackungsmaschine beliebige Packungsarten produzieren wie zum Beispiel eine Kammermaschine oder eine Tiefziehmaschine.

Die pneumatische Einrichtung 9 ist kein wesentliches Merkmal der Erfindung. Die pneumatische Einrichtung 9 kann weggelassen werden, wobei der Spindelantrieb so ausgelegt wird, dass er die zum Siegeln erforderliche Hubkraft aufbringt.

Der Spindelantrieb kann auch als Hubwerk (gegebenenfalls ohne Siegelfunktion) zum Beispiel für einen halbautomatischen Traysealer verwendet werden, um eine Energieeinsparung zu erreichen. Hier kann das bewegbare Siegelwerkzeug 3 weggelassen werden, so dass nur die Hubfunktion genutzt wird. In vorteilhafter Weise wird eine Abnutzung der Spindelmutter 4 durch die hohen Schließkräfte vermieden.

Bei dem dargestellten Ausführungsbeispiel dient die Schublade 11 gleichzeitig als das ortsfeste Kammerunterteil 11. Jedoch kann das ortsfeste Kammerunterteil als separates Teil in der Schublade aufgenommen sein.

Anstelle einer Schublade 11 kann auch ein anderer Mechanismus wie zum Beispiel ein Drehteller oder eine separate Hubeinrichtung vorgesehen sein.

Bei dem dargestellten Ausführungsbeispiel ist die Spindelmutter 4 ortsfest, während die Spindel 6 axial verschoben wird. Es ist eine kinematische Umkehr möglich, bei der eine Spindel drehend angetrieben wird und eine mit ihr im Eingriff stehende Spindelmutter axial verschiebt.

Bei dem dargestellten Ausführungsbeispiel stützt sich die zweite Feder 13 an der ortsfesten Platte 9b und an dem bewegbaren Kammeroberteil 12 ab. Bei einer alternativen, nicht abgebildeten Abwandlung ist die Federabstützung konstruktiv vereinfacht, indem die zweite Feder 13 an einem Spindelabsatz 24 der Spindel 6 und an dem bewegbaren Kammeroberteil 12 abgestützt ist.

Der Schutzumfang beschränkt sich nicht auf das dargestellte Ausführungsbeispiel, sondern er umfasst weitere Änderungen und Abwandlungen, sofern diese innerhalb des durch die beigefügten Ansprüche definierten Umfangs fallen.

## Patentansprüche

1. Hub- und Siegeleinrichtung (1) für eine Verpackungsmaschine, mit:
einem ortsfesten Siegelwerkzeug (2) und einem bewegbaren Siegelwerkzeug (3);
einer Spindelmutter (4), die durch ein Antriebselement (5) drehend angetrieben wird;
einer Spindel (6), die mit der Spindelmutter (4) im Eingriff ist und mit dem bewegbaren Siegelwerkzeug (3) verbunden ist; und
einer Steuervorrichtung (7), die durch das Antriebselement (5) eine Drehung der Spindelmutter (4) in einer ersten Drehrichtung steuert, um die Spindel (6) in einer Schließrichtung zu bewegen, in der das bewegbare Siegelwerkzeug (3) zu dem ortsfesten Siegelwerkzeug (2) hin bewegt wird, und die durch das Antriebselement (5) eine Drehung der Spindelmutter (4) in einer zweiten Drehrichtung steuert, um die Spindel (6) in einer Öffnungsrichtung zu bewegen, in der das bewegbare Siegelwerkzeug (3) von dem ortsfesten Siegelwerkzeug (2) weg bewegt wird.

2. Hub- und Siegeleinrichtung (1) für eine Verpackungsmaschine gemäß Anspruch 1,
wobei die Steuervorrichtung (7) die Spindelmutter (4) in der ersten Drehrichtung an eine erste Drehposition ansteuert, bei der das bewegbare Siegelwerkzeug (3) mit dem ortsfesten Siegelwerkzeug (2) in Kontakt ist; und
die Hub- und Siegeleinrichtung (1) einen Siegelprozess einer Verpackung durchführt, wenn die Spindelmutter (4) in der ersten Drehposition ist.

3. Hub- und Siegeleinrichtung (1) für eine Verpackungsmaschine gemäß Anspruch 1 oder 2,
wobei das bewegbare Siegelwerkzeug (3) mit der Spindel (6) über eine erste Feder (8) verbunden ist.

4. Hub- und Siegeleinrichtung (1) für eine Verpackungsmaschine gemäß einem der vorherigen Ansprüche, des weiteren mit:
einer pneumatischen Einrichtung (9, 9a, 9b), die durch die Steuervorrichtung (7) gesteuert wird, um die Spindelmutter (4) in der Schließ- und Öffnungsrichtung zu bewegen;
wobei die Steuervorrichtung (7) die pneumatischen Einrichtung (9, 9a, 9b) so steuert, dass das bewegbare Siegelwerkzeug (3) stärker zu dem ortsfesten Siegelwerkzeug (2) gedrückt wird, nachdem die Steuervorrichtung (7) die Drehung der Spindelmutter (4) in der ersten Drehrichtung an der ersten Drehposition angesteuert oder gestoppt hat, um danach den Siegelprozess oder einen weiteren Siegelprozess durchzuführen.

5. Hub- und Siegeleinrichtung (1) für eine Verpackungsmaschine gemäß Anspruch 3 oder 4, des weiteren mit:
einem bewegbaren Schneidwerkzeug (10, 10a), das fest mit der Spindel (6) verbunden ist,
wobei die Steuervorrichtung (7) die Drehung der Spindelmutter (4) in der ersten Drehrichtung an der ersten Drehposition stoppt, nachdem das bewegbare Siegelwerkzeug (3) mit dem ortsfesten Siegelwerkzeug (2) in Kontakt gelangt ist, die erste Feder (8) komprimiert wurde und das bewegbare Schneidwerkzeug (10, 10a) eine Siegelebene zwischen dem ortsfesten Siegelwerkzeug (2) und dem bewegbaren Siegelwerkzeug (3) durchlaufen hat.

6. Hub- und Siegeleinrichtung (1) für eine Verpackungsmaschine gemäß einem der vorherigen Ansprüche, des weiteren mit:
einem ortsfesten Kammerunterteil (11) und einem bewegbaren Kammeroberteil (12), wobei das bewegbare Kammeroberteil (12) durch eine ortfest gelagerte zweite Feder (13) gegen das ortfeste Kammerwerkzeug (11) gedrückt wird, um zwischen dem ortsfesten Kammerunterteil (11) und dem bewegbaren Kammeroberteil (12) eine im wesentlichen hermetische Kammer zu bilden, in der sich das bewegbare Siegelwerkzeug (3) und das ortsfeste Siegelwerkzeug (2) befinden;
wobei die Spindel (6) mit dem bewegbaren Kammeroberteil (12) in einem Zugeingriff ist, um das bewegbare Kammeroberteil (12) von dem ortsfesten Kammerunterteil (11) in der Öffnungsrichtung gegen die Kraft der zweiten Feder (13) weg zu ziehen;
wobei die Steuervorrichtung (7) die Drehung der Spindelmutter (4) in der ersten Drehrichtung an einer zweiten Drehposition stoppt, nachdem das bewegbare Kammeroberteil (12) mit dem ortsfesten Kammerunterteil (11) in Kontakt gelangt ist, wobei die zweite Drehposition in der ersten Drehrichtung vor der ersten Drehposition liegt.

7. Hub- und Siegeleinrichtung (1) für eine Verpackungsmaschine gemäß Anspruch 6, des weiteren mit:
einer Evakuierungs- oder Begasungsvorrichtung (14), die die im wesentlichen hermetische Kammer evakuiert und/oder begast, nachdem die Steuervorrichtung (7) die Drehung der Spindelmutter (4) in der ersten Drehrichtung an der zweiten Drehposition gestoppt hat.

8. Verpackungsmaschine mit einer Hub- und Siegeleinrichtung (1) gemäß einem der vorherigen Ansprüche,
wobei das ortsfeste Siegelwerkzeug (2) und/oder das ortsfeste Kammerunterteil (11) in einer Schublade (11) angeordnet oder als Schublade (11) ausgebildet sind und mit dieser in die Verpackungsmaschine hinein und aus dieser heraus schiebbar sind.

9. Verpackungsmaschine mit einer Hub- und Siegeleinrichtung (1) gemäß einem der Ansprüche 1 bis 8,
wobei das bewegbare Siegelwerkzeug (3) zusammen mit der Spindel (6) aus der Verpackungsmaschine entnehmbar ist, indem durch Drehen der Spindelmutter (4) in der ersten Drehrichtung der Eingriff zwischen der Spindelmutter (4) und der Spindel (6) gelöst wird.

10. Verpackungsmaschine gemäß Anspruch 8 oder 9, wobei die Verpackungsmaschine ein Traysealer ist.

## Claims

1. A lifting and sealing apparatus (1) for a packaging machine with:
a stationary sealing tool (2) and a movable sealing tool (3);
a spindle nut (4) which can be driven to rotate by a drive member (5);
a spindle (6) which is in engagement with the spindle nut (4) and is connected to the movable sealing tool (3), and
a control device (7) which by means of the drive member (5) controls rotation of the spindle nut (4) in a first direction of rotation so as to move the spindle (6) in a closing direction, in which the movable sealing tool (3) is moved towards the stationary sealing tool (2), and which by means of the drive member (5) controls rotation of the spindle nut (4) in a second direction of rotation so as to move the spindle (6) in an opening direction, in which the movable sealing tool (3) is moved away from the stationary sealing tool (2).

2. A lifting and sealing apparatus (1) for a packaging machine according to Claim 1,
wherein the control device (7) drives the spindle nut (4) in the first direction of rotation into a first rotational position, in which the movable sealing tool (3) is in contact with the stationary sealing tool (2), and
the lifting and sealing apparatus (1) carries out a sealing process of a packaging when the spindle nut (4) is in its first rotational position.

3. A lifting and sealing apparatus (1) for a packaging machine according to Claim 1 or 2,
wherein the movable sealing tool (3) is connected to the spindle (6) by way of a first spring (8).

4. A lifting and sealing apparatus (1) for a packaging machine according to any one of the preceding Claims, additionally with:
a pneumatic device (9,9a,9b) which is controlled by the control device (7) so as to move the spindle nut (4) in the closing direction and opening direction;
wherein the control device (7) controls the pneumatic device (9,9a,9b) so that the movable sealing tool (3) is pressed more powerfully towards the stationary sealing tool (2) after the control device (7) has activated or stopped the spindle nut (4) in the first direction of rotation at the first rotational position so as to carry out thereafter the sealing process or another sealing process.

5. A lifting and sealing apparatus (1) for a packaging machine according to Claim 3 or 4, additionally with:
a movable cutting tool (10,10a) which is securely connected to the spindle (6),
wherein the control device (7) stops the rotation of the spindle nut (4) in the first direction of rotation at the first rotational position, after the movable sealing tool (3) has come into contact with the stationary sealing tool (2), the first spring (8) has been compressed and the movable cutting tool (10,10a) has passed through a sealing plane between the stationary sealing tool (2) and the movable sealing tool (3).

6. A lifting and sealing apparatus (1) for a packaging machine according to any one of the preceding Claims, additionally with:
a stationary chamber lower part (11) and a movable chamber upper part (12), wherein the movable chamber upper part (12) is pressed by a stationarily mounted second spring (13) toward the stationary chamber tool (11) so as to form between the stationary chamber lower part (11) and the movable chamber upper part (12) a substantially hermetic chamber, in which the movable sealing tool (3) and the stationary sealing tool (2) are situated;
wherein the spindle (6) is in tension engagement with the movable chamber upper part (12) so as to draw the movable chamber upper part (12) away from the stationary chamber lower part (11) in the opening direction against the force of the second spring (13);
wherein the control device (7) stops the rotation of the spindle nut (4) in the first direction of rotation at a second rotational position, after the movable chamber upper part (12) has come into contact with the stationary chamber lower part (11), wherein the second rotational position is situated ahead of the first rotational position in the first direction of rotation.

7. A lifting and sealing apparatus (1) for a packaging machine according to Claim 6, additionally with:
an evacuating or gassing device (14) which evacuates and/or gasses the substantially hermetic chamber, after the control device (7) has stopped the rotation of the spindle nut (4) in the first direction of rotation at the second rotational position.

8. A packaging machine with a lifting and sealing apparatus (1) according to any one of the preceding Claims,
wherein the stationary sealing tool (2) and/or the stationary chamber lower part (11) is arranged in a drawer (11) or is in the form of a drawer (11) and can be slid therewith into and out of the packaging machine.

9. A packaging machine with a lifting and sealing apparatus (1) according to any one of Claims 1 to 8,
wherein the movable sealing tool (3) can be removed from the packaging machine together with the spindle (6), in that by rotating the spindle nut (4) in the first direction of rotation the engagement between the spindle nut (4) and the spindle (6) is released.

10. A packaging machine according to Claim 8 or 9, wherein the packaging machine is a tray sealer.

## Revendications

1. Dispositif de soulèvement et de scellage (1) pour une machine d'emballage, avec :
un outil de scellage fixe (2) et un outil de scellage mobile (3) ;
un écrou de broche (4) qui est entraîné en rotation par un élément d'entraînement (5) ;
une broche (6) qui est en prise avec l'écrou de broche (4) et qui est reliée à l'outil de scellage mobile (3) ; et
un dispositif de commande (7) qui, grâce à l'élément d'entraînement (5), commande une rotation de l'écrou de broche (4) dans un premier sens de rotation afin de déplacer la broche (6) dans un sens de fermeture dans lequel l'outil de scellage mobile (3) est déplacé vers l'outil de scellage fixe (2), et qui, grâce à l'élément d'entraînement (5), commande une rotation de l'écrou de broche (4) dans un second sens de rotation afin de déplacer la broche (6) dans un sens d'ouverture dans lequel l'outil de scellage mobile (3) est éloigné de l'outil de scellage fixe (2).

2. Dispositif de soulèvement et de scellage (1) pour une machine d'emballage selon la revendication 1,
étant précisé que le dispositif de commande (7) amène l'écrou de broche (4), dans le premier sens de rotation, dans une première position de rotation dans laquelle l'outil de scellage mobile (3) est en contact avec l'outil de scellage fixe (2) ; et
le dispositif de soulèvement et de scellage (1) effectue une opération de scellage sur un emballage lorsque l'écrou de broche (4) est dans la première position de rotation.

3. Dispositif de soulèvement et de scellage (1) pour une machine d'emballage selon la revendication 1 ou 2,
étant précisé que l'outil de scellage mobile (3) est relié à la broche (6) par un premier ressort (8).

4. Dispositif de soulèvement et de scellage (1) pour une machine d'emballage selon l'une des revendications précédentes, avec par ailleurs :
un dispositif pneumatique (9, 9a, 9b) qui est commandé par le dispositif de commande (7) pour déplacer l'écrou de broche (4) dans les sens de fermeture et d'ouverture ;
étant précisé que le dispositif de commande (7) commande le dispositif pneumatique (9, 9a, 9b) de telle sorte que l'outil de scellage mobile (3) soit plus fortement pressé contre l'outil de scellage fixe (2) après que le dispositif de commande (7) a commandé ou arrêté la rotation de l'écrou de broche (4) dans le premier sens de rotation au niveau de la première position de rotation, afin d'effectuer ensuite l'opération de scellage ou une opération de scellage supplémentaire.

5. Dispositif de soulèvement et de scellage (1) pour une machine d'emballage selon la revendication 3 ou 4, avec par ailleurs :
un outil de coupe mobile (10, 10a) qui est solidaire de la broche (6),
étant précisé que le dispositif de commande (7) arrête la rotation de la broche d'écrou (4) dans le premier sens de rotation au niveau de la première position de rotation après que l'outil de scellage mobile (3) est venu en contact avec l'outil de scellage fixe (2), que le premier ressort (8) a été comprimé et que l'outil de coupe mobile (10, 10a) a traversé un plan de scellage entre l'outil de scellage fixe (2) et l'outil de scellage mobile (3).

6. Dispositif de soulèvement et de scellage (1) pour une machine d'emballage selon l'une des revendications précédentes, avec par ailleurs :
une partie de chambre inférieure fixe (11) et une partie de chambre supérieure mobile (12), la partie de chambre supérieure mobile (12) étant pressée par un second ressort fixe (13) contre l'outil de chambre fixe (11) pour former entre les parties de chambre inférieure fixe (11) et supérieure mobile (12) une chambre globalement hermétique dans laquelle se trouvent l'outil de scellage mobile (3) et l'outil de scellage fixe (2) ;
étant précisé que la broche (6) est en relation de traction avec la partie de chambre supérieure mobile (12) afin de tirer celle-ci à l'encontre de la force du second ressort (13) pour l'éloigner de la partie de chambre inférieure fixe (11), dans le sens d'ouverture ;
et que le dispositif de commande (7) arrête la rotation de l'écrou de broche (4) dans le premier sens de rotation au niveau d'une seconde position de rotation après que la partie de chambre supérieure mobile (12) est venue en contact avec la partie de chambre inférieure fixe (11), la seconde position de rotation étant située avant la première, dans le premier sens de rotation.

7. Dispositif de soulèvement et de scellage (1) pour une machine d'emballage selon la revendication 6, avec par ailleurs :
un dispositif d'évacuation ou de gazage (14) qui évacue et/ou gaze la chambre globalement hermétique après que le dispositif de commande (7) a arrêté la rotation de l'écrou de broche (4) dans le premier sens de rotation au niveau de la seconde position de rotation.

8. Machine d'emballage avec un dispositif de soulèvement et de scellage (1) selon l'une des revendications précédentes,
étant précisé que l'outil de scellage fixe (2) et/ou la partie de chambre inférieure fixe (11) sont disposés dans un tiroir (11) ou sont conçus comme un tiroir (11) et sont aptes à être glissés avec celui-ci à l'intérieur et hors de la machine d'emballage.

9. Machine d'emballage avec un dispositif de soulèvement et de scellage (1) selon l'une des revendications 1 à 8,
étant précisé que l'on peut enlever de la machine d'emballage l'outil de scellage mobile (3) avec la broche (6) en désolidarisant l'écrou de broche (4) de la broche (6), en tournant l'écrou de broche (4) dans le premier sens de rotation.

10. Machine d'emballage selon la revendication 8 ou 9, étant précisé qu'elle est constituée par une operculeuse.
